# DEMANDE DE BREVET EUROPEEN

(11) **EP 1 280 074 A1**
(43) Date de publication de la demande: **29.01.2003**
(21) Numéro de dépôt: 02077775.1
(22) Date de dépôt: 03.07.2002
(51) Int. Cl.: G06F 17/30

(54) **Utilisation d'hyperliens dans un programme d'une application d'automatisme et station de programmation d'une telle application**

(30) Priorité: 19.07.2001 FR 0109698
(71) Demandeur: Schneider Automation, 06560 Valbonne (FR)
(72) Inventeur: Ramahefarivony, Eric, 38240 Meylan (FR); Chapas, Bernard, 38760 Varces (FR); Lemoine, Philippe, 06650 Le Rouret (FR)

(57) **Abrégé**

L'invention décrit un procédé de mis en oeuvre d'un équipement d'automatisme. L'équipement d'automatisme comporte une mémoire application qui contient un programme application permettant de faire le contrôle/commande d'une application d'automatisme. Le procédé comprend une étape de stockage d'au moins une adresse dans la mémoire application sous forme d'un hyperlien associé à un document relatif à l'application d'automatisme et mémorisé à l'extérieur de l'équipement d'automatisme. Cette adresse est insérée dans un champ commentaire du programme application. L'invention décrit également une station de programmation capable d'insérer et de visualiser un tel document.

## Description

La présente invention concerne un procédé permettant l'utilisation d'hyperliens dans un programme application mémorisé dans un équipement d'automatisme chargé du contrôle/commande d'une application d'automatisme, une station de programmation capable de mettre en oeuvre un tel procédé et un équipement d'automatisme mémorisant des hyperliens. Cette application d'automatisme appartient par exemple au domaine des automatismes industriels, des automatismes du bâtiment ou du contrôle/commande des réseaux électriques de distribution.

Un équipement d'automatisme désigne ci-après un automate programmable, une station de contrôle/commande, une commande numérique, ou tout module d'automatisme pouvant contenir et exécuter un programme application permettant de faire le contrôle/commande d'une partie d'une application d'automatisme, comme notamment un variateur de vitesse ou un module logique. Une station de programmation désigne ci-après un équipement informatique, notamment un ordinateur personnel de type PC, connectable à un équipement d'automatisme.

Un équipement d'automatisme comporte une unité centrale (UC) et au moins un module d'entrées-sorties assurant la liaison entre l'unité centrale et des capteurs et préactionneurs de l'application d'automatisme à commander.

Habituellement, l'unité centrale comprend au moins un processeur, une mémoire non volatile, en général non modifiable (type ROM), ou modifiable (type EEPROM), contenant le programme constructeur appelé encore système d'exploitation propriétaire (proprietary operating system) exprimé dans un langage spécifique au constructeur de l'équipement d'automatisme, une mémoire vive et un gestionnaire des entrées/sorties, qui communiquent entre eux. La mémoire vive ou mémoire volatile (type RAM) contient, dans une première zone, le programme utilisateur et dans une deuxième zone, les données, en particulier les images des états des modules d'entrées-sorties et les constantes relatives au programme utilisateur.

Le programme utilisateur, appelé programme application dans la suite de l'exposé, est chargé de réaliser le contrôle et/ou la commande d'une application d'automatisme ou d'une partie d'une application d'automatisme au moyen d'entrées/sorties pilotées par ce programme d'application. Il est élaboré par un concepteur et est écrit dans un ou plusieurs langages graphiques d'automatisme intégrant notamment des schémas à contacts (Ladder Diagram), appelés ci-après langage LADDER, des diagrammes fonctionnels en séquence (Sequential Function Chart ou langage Grafcet), appelés ci-après langage SFC, des blocs fonctions (Function Block Description), appelés ci-après langage FBD, ou bien dans des langages textuels d'automatisme de type IL (Instruction List) ou ST (Structured Text). Ces langages d'automatisme sont préférentiellement conformes à la norme IEC1131-3, de façon à faciliter la programmation par un concepteur automaticien ne maîtrisant pas forcément les langages informatiques. La conception de programmes utilisant ces langages d'automatisme se fait habituellement sur des stations de programmation qui sont reliées ou non à l'équipement d'automatisme à programmer.

Il est connu dans l'art antérieur, par exemple dans le document WO98/50834, de créer sur des ordinateurs, par exemple de type PC, des hyperliens dans des documents d'applications courantes. Ces hyperliens renvoient sur des documents externes appartenant à d'autres applications. Dans certains cas, les adresses correspondant à ces hyperliens sont mémorisées sur le disque dur de l'ordinateur et renvoient à des documents mémorisés également sur le disque dur. Dans d'autres cas, les adresses sont stockées sur le disque dur et renvoient à des documents externes mémorisés sur un serveur de fichiers ou serveur WEB, lorsqu'il s'agit de documents WEB.

Lorsqu'un utilisateur souhaite obtenir des informations sur son application d'automatisme, par exemple pour établir un diagnostic suite à une déficience d'un équipement d'automatisme, celui-ci est connecté à une station de programmation de manière à visualiser le programme application sur la station de programmation pour déceler la déficience et corriger le programme application d'automatisme. Lors de l'établissement d'un diagnostic, il peut être nécessaire à l'opérateur de visualiser sur son écran des documents externes au programme application. Ces documents sont de tout type. Ils peuvent même être une application (suffixe ".exe"). Cependant les documents dont le volume est important, en particulier ceux comportant des schémas électriques CAO, des images, du son, de la vidéo ou des bases de données, etc... , ne peuvent être stockés que sur des mémoires de taille importante. Ils ne peuvent donc pas être stockés directement sur une mémoire de l'équipement d'automatisme, celle-ci étant de taille trop réduite. Il serait certes possible de stocker ces documents externes sur la station de programmation de l'équipement d'automatisme ou sur un serveur externe connecté à la station, tel qu'un serveur de fichier ou serveur WEB, mais ceci présente un inconvénient. En effet, lorsque la station de programmation tombe en panne ou lorsqu'elle est remplacée par une autre station de programmation, les documents ne deviennent plus accessibles et surtout aucune trace de ceux-ci n'est conservée. En particulier, les documents WEB stockés sur un serveur WEB et qui ne sont donc pas stockés directement sur la station de programmation ne sont plus facilement accessibles car leur adresse sur la station de remplacement n'aura pas été forcément conservée.

Le but de l'invention est de pallier cet inconvénient en proposant un moyen de conserver toujours une trace des documents externes utiles lors de la visualisation d'un programme application sur une station de programmation quel que soit l'endroit où ces documents sont mémorisés, sachant que la taille de ces documents externes empêche qu'ils soient directement mémorisés dans l'équipement d'automatisme. Selon l'invention, ces documents resteront toujours facilement accessibles ce qui permet de rendre l'équipement d'automatisme indépendant de la station de programmation. De plus, selon l'invention, il sera également possible de visualiser les documents depuis n'importe quel terminal mis en réseau avec l'équipement d'automatisme et comprenant des logiciels de navigation standards.

Ce but est atteint par un procédé de mise en oeuvre d'un équipement d'automatisme composé d'une unité centrale et d'au moins un module d'entrées-sorties assurant la liaison entre des capteurs et des préactionneurs d'une application d'automatisme à commander, l'unité centrale comprenant au moins un processeur, une mémoire non volatile qui contient un système d'exploitation, une mémoire application qui contient un programme application permettant de faire le contrôle/commande d'une application d'automatisme et agissant sur les entrées-sorties des modules. Le procédé comporte une étape de stockage dans la mémoire application d'au moins une adresse sous forme d'un hyperlien qui est associé à un document relatif à l'application d'automatisme, mémorisé à l'extérieur de l'équipement d'automatisme. Selon une caractéristique, les adresses stockées dans la mémoire application de l'équipement d'automatisme sont accessibles sous la forme d'hyperliens dans des champs commentaires du programme application.

Selon une particularité, le procédé comporte une étape de visualisation d'un document relatif à l'application d'automatisme et associé à un hyperlien mémorisé dans la mémoire application de l'équipement d'automatisme, grâce à des moyens d'affichage chargés sur une station de programmation reliée à l'équipement d'automatisme et exploitant les données d'un champ commentaire du programme application.

Ces commentaires sont stockés dans la mémoire application de l'équipement d'automatisme qui est de taille réduite et dans ces commentaires, il est impossible de saisir autre chose que du texte. La création d'hyperliens dans ces commentaires permet donc de renvoyer sur des documents externes de tous types, par exemple, vidéo, sons, images, bases de données, parce qu'ils sont stockés dans des moyens de mémorisation de la station de programmation ou sur un serveur WEB Internet ou Intranet, et non pas dans une mémoire de l'équipement d'automatisme.

Selon une autre particularité, l'hyperlien manipulé par la station de programmation est du texte au format HTML.

Selon une autre particularité, le programme application mémorisé dans l'équipement d'automatisme est décrit à l'aide d'un langage XML.

Selon une autre particularité, des moyens de visualisation de la station de programmation présentent une arborescence de la structure du programme d'application de l'équipement d'automatisme, au moins une adresse mémorisée dans la mémoire application de l'équipement d'automatisme associée à un document externe étant rendue accessible sous la forme d'un hyperlien visualisable à un certain niveau de l'arborescence.

Un autre but de l'invention est de proposer un système informatique pour la création d'hyperliens et la visualisation de documents liés.

Ce but est atteint par une station de programmation capable de mettre en oeuvre une tel procédé de mise en oeuvre d'hyperliens. Elle comprend des moyens de connexion avec un équipement d'automatisme, des moyens de lecture d'une adresse sous forme d'hyperlien mémorisée dans une mémoire application de l'équipement d'automatisme, des moyens de recherche et de visualisation d'un document associé à l'hyperlien, mémorisé à l'extérieur de l'équipement d'automatisme et relatif à l'application d'automatisme.

Selon une particularité, la station de programmation comprend des moyens de mémorisation d'au moins un document associé à un hyperlien et relatif à l'application d'automatisme, des moyens d'insertion pour insérer une adresse sous forme d'hyperlien dans un champ commentaire d'un programme application d'un équipement d'automatisme, cette adresse étant stockée dans la mémoire application de l'équipement d'automatisme, des moyens de sélection d'un ou plusieurs termes dans un champ commentaire du programme application, les moyens d'insertion insérant une adresse sous forme d'hyperlien dans ce champ commentaire au niveau du(des) terme(s) sélectionné(s).

La station de programmation comprend également des moyens d'affichage d'une arborescence de la structure d'un programme application d'un équipement d'automatisme, comportant plusieurs niveaux et des moyens d'insertion permettant d'insérer une adresse sous la forme d'un hyperlien à un certain niveau de l'arborescence.

Selon une autre particularité, la station de programmation mémorise dans une mémoire interne au moins un fichier "source" d'une grammaire de description des applications d'automatisme dans un langage unique hiérarchisé et orienté objet vers au moins un des langages de description graphique (LADDER, SFC, FBD).

Selon une autre particularité, la mémoire contient également un fichier de description du programme d'application, un fichier de description des données et un fichier de description des entrées-sorties dans ce langage objet hiérarchisé.

Un autre but de l'invention est de proposer un équipement d'automatisme comportant une unité centrale et au moins un module d'entrées-sorties, l'unité centrale comprenant au moins un processeur et une mémoire application qui contient un programme application permettant de faire le contrôle/commande d'une application d'automatisme via le(s) module(s) d'entrées-sorties. La mémoire application de l'équipement d'automatisme mémorise au moins une adresse sous forme d'un hyperlien qui est accessible dans un champ commentaire du programme application et qui est associé à un document relatif à l'application d'automatisme, ce document étant mémorisé à l'extérieur de l'équipement d'automatisme.

L'invention, avec ses caractéristiques et avantages, ressortira plus clairement à la lecture de la description faite en référence aux dessins annexés dans lesquels :
- la figure 1 représente l'activation d'un hyperlien placé dans un champ commentaire d'un programme application d'un équipement d'automatisme,
- la figure 2 représente une boîte de dialogue de création d'un hyperlien dans un champ commentaire,
- la figure 3 représente la création d'un hyperlien dans l'arborescence d'un programme application,
- la figure 4 représente l'ouverture d'un document à partir d'un hyperlien posé dans l'arborescence d'un programme application,
- la figure 5 représente une boîte de dialogue de création d'un hyperlien dans une arborescence du programme d'application,
- la figure 6 représente un écran d'aide au diagnostic avec un message de diagnostic utilisant un hyperlien,
- la figure 7 représente un exemple d'un document externe associé à un hyperlien concernant une aide au diagnostic,
- la figure 8 représente un exemple d'architecture d'un équipement d'automatisme et d'une station de programmation selon l'invention,
- la figure 9 représente une vue schématique d'une station de programmation équipée d'un module gestionnaire XML pour importer ou exporter des fichiers de description du langage XML vers un des langages graphiques d'automatisme,
- la figure 10 représente une vue schématique de l'organisation en mémoire de la grammaire permettant de décrire une application dans un langage unique XML,
- la figure 11 représente un composant logiciel qui constitue un générateur d'index de balises pour produire des fichiers d'index,
- la figure 12 représente une vue schématique des modules constitutifs d'un module gestionnaire XML permettant l'importation et l'exportation de fichiers d'un langage vers un autre.

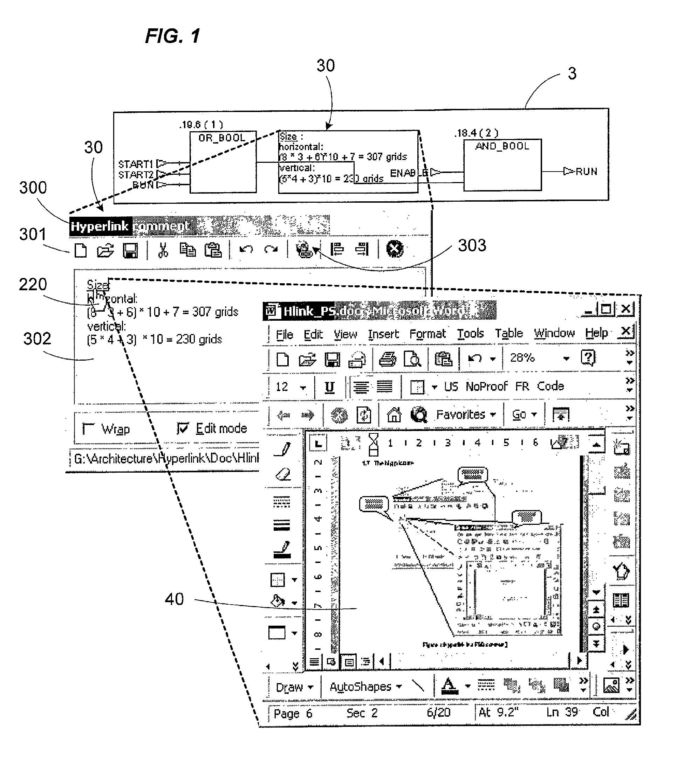

L'invention va à présent être décrite en liaison avec les figures 1 à 12.

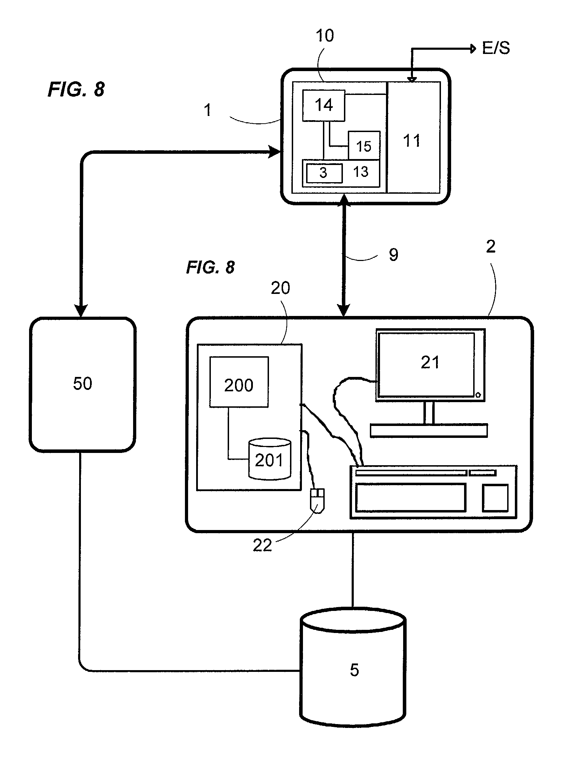

Un équipement d'automatisme (1, fig. 8) est, comme décrit précédemment, composé d'une unité centrale (10) et d'au moins un module (11) d'entrées-sorties. L'unité centrale comprend un processeur (14) et une mémoire morte (15) en général non modifiable (type ROM), contenant le programme constructeur appelé encore système d'exploitation propriétaire (proprietary operating system) exprimé dans un langage spécifique au constructeur de l'équipement d'automatisme et des moyens de mémorisation contenant notamment une mémoire application (13). Le(s) module(s) (11) est(sont) raccordé(s) à des capteurs et à des préactionneurs (E/S) de l'application d'automatisme à commander. Le programme utilisateur, appelé programme application (3), exécutant une application d'automatisme. Dans l'exemple de la figure 1, le programme application est écrit en langage LADDER. Ce programme application (3) est mémorisé dans la mémoire application (13) de l'équipement d'automatisme (1). Cette mémoire application (13) est généralement une mémoire vive pour autoriser les modifications du concepteur du programme application. Mais elle peut également être de type non volatile (par exemple PROM) pour garantir l'intégrité de son contenu contre toute modification intempestive.

Le programme application (3, fig. 1) est décomposé en tâches, une tâche étant un ensemble d'instructions exécutées périodiquement par le processeur de l'unité centrale (10). Le programme application est découpé en modules et dispose de champs commentaires (30) (en anglais "comment") affichables sur un écran (21) d'une station de programmation (2) dans des boîtes de dialogues de commentaires, comme représenté en figure 1. Ces champs commentaires (30) peuvent être des commentaires de variables ou la fiche descriptive d'un bloc fonction. Un champ commentaire (30) est mémorisé, comme le programme application (3), dans la mémoire application (13) de l'équipement d'automatisme (1). Cependant, du fait de la taille réduite de la mémoire application (13), les champs commentaires (30) ne peuvent pas toujours contenir toutes les informations qu'un utilisateur voudrait saisir ou visualiser. De plus, ce champ commentaire (30) ne peut habituellement accueillir que du texte. Il est donc impossible de faire figurer dans ce champ commentaire (30), par exemple, des schémas d'implantation et de câblage de l'installation, des notes de travail ayant servi à la mise au point du programme, des images pour faciliter le dépannage, etc...

Par conséquent, selon l'invention, des adresses de documents externes sont stockées dans la mémoire application (13) de l'équipement d'automatisme (1) mémorisant le programme d'application, en étant insérées sous forme d'hyperliens (en anglais "hyperlink") dans ces champs commentaires (30). Ces hyperliens sont constitués par du texte dans un format HTML et ne sont pas interprétés lors de l'exécution de l'application d'automatisme.

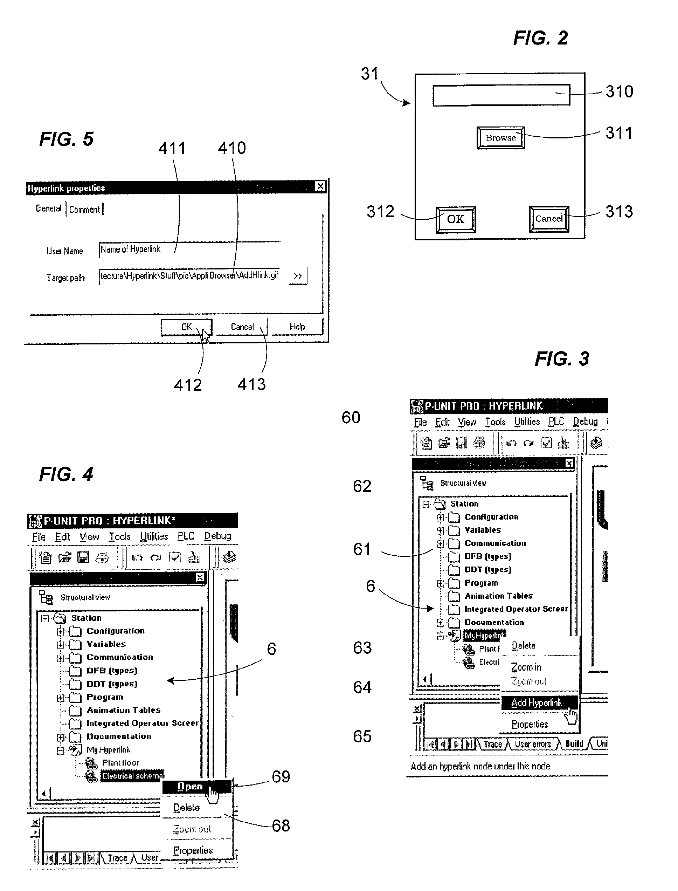

La station de programmation (2) comporte des moyens d'insertion de ces hyperliens dans des champs commentaires (30). Dans le mode de réalisation présenté, les hyperliens sont insérés dans un champ commentaire (30) à partir d'une boîte (31) de dialogue spécifique, dont un exemple est représenté en figure 2, affichée sur la station de programmation (2). Ce champ commentaire (30) est complété dans la boîte de dialogue de commentaires, constituant une fenêtre d'écran (300, 301, 302, 303, fig. 1) affichée sur la station de programmation. Cette fenêtre dispose d'une entête (300), sous laquelle on trouve une barre d'outils (301) comprenant un certain nombre d'icônes sur lesquels il est possible de cliquer à l'aide d'un dispositif de pointage de la station de programmation (2), tel qu'une souris (22). Sous la barre d'outils (301), figure un espace (302) dans lequel il est possible d'insérer le commentaire, certains mots du commentaire pouvant prendre la forme d'un hyperlien. Cette opération de création d'hyperlien est effectuée sur la station de programmation (2, fig.8). Dans le champ commentaire (30, fig.1), le terme destiné à devenir un hyperlien est d'abord sélectionné à partir de moyens de sélection de la station de programmation. Dans l'exemple de la figure 1, le champ commentaire (30) est relatif à la taille (en anglais "size") d'une variable du programme application (3) et on peut sélectionner ce mot «size» pour devenir l'hyperlien, par exemple à partir d'une action sur la souris (22). Ensuite, après sélection d'une icône (303) spécifique de la barre d'outils (301) de la fenêtre, par exemple à l'aide de la souris, le processeur (200, fig.8) de l'unité centrale (20) de la station de programmation (2) active l'apparition en incrustation sur l'écran (21, fig.8) de la station de programmation (2) de la boîte de dialogue (31) de création de l'hyperlien. L'activation de la boîte de dialogue (31) pourrait aussi dans une autre variante, être effectuée à partir d'un menu déroulant disposant d'un intitulé, par exemple «insertion» et de sous rubriques dont l'une pourrait être «hyperlien». Selon un mode de réalisation, la boîte de dialogue (31) de création de l'hyperlien, représentée en figure 2, comprend un champ (310) de saisie du chemin du document, externe au programme application (3), auquel l'utilisateur souhaite que le terme sélectionné renvoie. Le chemin est mémorisé sous la forme d'une adresse dans la mémoire application (13) de l'équipement d'automatisme (1). Cette adresse stockée dans la mémoire (13) de l'équipement d'automatisme a, par exemple, la forme suivante :
<**a href**="D:\Architecture\Patent\Pat.doc">hlink</**a**>

La balise débutant par le paramètre d'ancrage (en anglais "anchor") "<**a**" introduit le chemin absolu ou relatif de la ressource préfixé par le mot-clef "href" (ici un document au suffixe ".doc"). Le mot ou expression hypertexte qui sera souligné dans un navigateur WEB ou dans la station de programmation est ici "hlink" disposé avant la fermeture de la balise "</**a**>". Le slash "/" préfixant le paramètre d'ancrage "**a**" indique que l'étiquette (en anglais "tag") se referme, délimitant ainsi l'étendue du texte souligné.

Si l'utilisateur ne connaît pas le chemin du document externe qu'il souhaite associer à l'hyperlien créé, il peut activer un bouton (311) situé par exemple au-dessous du champ (310) de saisie de l'adresse. Ce bouton (311) permet à l'utilisateur de parcourir dans un explorateur les documents mémorisés sur le disque dur (201) de la station de programmation (2) ou sur un autre support. Pour insérer le chemin du document externe à lier dans le champ (310) de saisie, l'utilisateur peut alors effectuer une action appelée un glisser-déposer ("drag and drop" en anglais) de ce chemin depuis l'explorateur de fichier ouvert sur une fenêtre de l'écran (21) de la station de programmation en même temps que la boîte de dialogue (31) de création d'hyperlien.

Les documents externes associés aux hyperliens selon l'invention peuvent être avantageusement de tous types et volumineux car ils sont mémorisés, non pas dans une mémoire de l'équipement d'automatisme (1) dont la taille est limitée, mais dans des moyens de mémorisation (201), tels que le disque dur (201) de la station de programmation (2) qui est par exemple un ordinateur de type PC. Ils peuvent aussi être mémorisés sur un serveur (5), tel que, par exemple, un serveur Internet ou Intranet dans le cas où les documents seraient des pages WEB ; l'adresse à laquelle fait référence l'hyperlien est alors une adresse URL. L'hyperlien constitue alors un raccourci vers tous documents externes ou vers des sites WEB que l'on souhaite associer à l'application d'automatisme.

Une fois l'adresse saisie dans la boîte de dialogue (31), on peut par exemple valider ou non cette saisie par un clic à l'aide de la souris sur un bouton (312, 313). Un premier bouton (312) est par exemple dénommé «OK» pour la validation. L'autre bouton (313) intitulé, par exemple, «CANCEL» (en français "annuler") permet de sortir à tout moment de la procédure de création d'un hyperlien. Après validation, le terme hyperlien dans le champ commentaire (30), apparaît, de manière connue, de façon différente par rapport aux autres termes du commentaire, par exemple, en bleu souligné. Lorsque l'utilisateur met le pointeur contrôlé par sa souris (22) sur le terme hyperlien, ce pointeur prend la forme d'une main (220), comme représenté en figure 1. Ceci est fait pour signaler à l'utilisateur que ce terme est un hyperlien, c'est à dire que s'il sélectionne ce terme en cliquant dessus, des moyens spécifiques de la station de programmation lisent l'adresse saisie dans la boîte de dialogue (31, fig.2) et cette adresse est stockée selon l'invention dans la mémoire application (13) de l'équipement d'automatisme (1) pour permettre ultérieurement d'ouvrir le document externe correspondant à cette adresse. Une bulle d'aide peut s'afficher au bout d'un certain temps si l'utilisateur maintient son pointeur fixe sur l'hyperlien. De même, l'adresse de l'hyperlien créé peut s'afficher lorsque le pointeur est maintenu sur le terme hyperlien.

Les documents associés pourront être de tous types par exemple textes, vidéo, sons, images, bases de données,... et pourront être de nature très diverses, tels que notamment :
- des plans d'implantation de l'application d'automatisme,
- des fichiers de description détaillée de l'application d'automatisme avec organigrammes, séquencements, algorithmes, modes de fonctionnement,
- des fichiers de CAO mécanique, électrique,
- des fichiers de câblage d'entrées/sorties,
- des fichiers de paramétrage ou de réglage d'un module ou d'une fonction,
- des fichiers d'aide à la mise au point, à l'exploitation et au dépannage de l'application d'automatisme, sachant que ces fichiers pourront par ailleurs être enrichis par les opérateurs eux-mêmes, de façon à constituer une base de connaissance sur l'application,
- ...

Les documents ne sont visualisables que sur la station de programmation (2) et dans le cas seulement où la station de programmation (2) est reliée à l'équipement d'automatisme (1) et où elle dispose des moyens permettant cette visualisation sur l'écran (21) tels que, par exemple, un navigateur WEB ou un logiciel d'accès aux informations stockées sur le disque dur (201) de la station de programmation (2). Dans le cas de la figure 1, le document (40) associé est visualisé sur le logiciel «Microsoft WORD» (marque déposée), le nom de ce document étant dans cet exemple "Hlink_PS.doc".

Selon l'invention, les adresses des documents sont toutes stockées dans la mémoire application (13) de l'équipement d'automatisme (1), de manière à en conserver toujours une trace. En particulier, lorsque l'on change de station de programmation (2), pour cause de panne notamment, les adresses des documents restent mémorisées sur l'équipement d'automatisme (1) et peuvent toujours renvoyer, sous la forme d'hyperliens, à des documents externes stockés sur un serveur, tel qu'un serveur WEB. L'utilisateur n'est donc pas lié par l'utilisation d'une station de programmation (2) particulière.

Ainsi, grâce à l'invention, le concepteur d'un programme application peut, dès la saisie de son programme application, stocker les différents hyperliens qu'il juge pertinent d'associer avec telle ou telle partie de ce programme application. Le fait de pouvoir saisir et mémoriser ces hyperliens en même temps que l'écriture ou la modification du programme application rend cette tâche plus facile et beaucoup plus intuitive pour le concepteur et/ou pour le metteur au point du programme.

Pour visualiser un document associé à un hyperlien, des échanges de données symbolisés par la flèche (9) sur la figure 8 seront donc nécessaires entre la mémoire (13) de l'équipement d'automatisme (1) stockant l'adresse du document associé et la station de programmation (2). Celle-ci possède des moyens de visualisation de l'adresse sous forme d'hyperlien sur l'écran (21), des moyens de lecture de l'adresse dans la mémoire (13) de l'équipement d'automatisme (1) lorsque l'utilisateur clique sur l'hyperlien affiché dans le programme d'application (3) et des moyens de visualisation du document externe associé à l'hyperlien. Pour cela, la station de programmation (2) dispose aussi de moyens de recherche permettant, en fonction de l'adresse stockée dans la mémoire application (13) de l'équipement d'automatisme (1), de rechercher le document associé à l'hyperlien soit sur des moyens de mémorisation de la station de programmation (2), comme le disque dur (201) de son unité centrale (20), soit à l'extérieur de la station de programmation (2), par exemple sur un serveur (5) d'un réseau interne (Intranet) ou externe (Internet), accessible via un réseau de communication local ou global. Une fois le document associé retrouvé, le processeur (200) de la station de programmation (2) exécute un programme spécifique d'affichage du navigateur permettant de visualiser le document associé sur l'écran (21).

Un navigateur (en anglais "Application Browser") chargé sur la station de programmation (2) présente la structure du programme application (3) selon une arborescence (6), comme représenté en figure 3. Ce navigateur est divisé principalement en deux parties, une partie (60) constituant son menu, et une autre partie (61) affichant l'arborescence (6). Des niveaux (62) de cette arborescence correspondent notamment aux différentes tâches (en anglais "tasks") exécutées par le processeur (14) de l'unité centrale (10) de l'équipement d'automatisme (1) et aux sections constituant les tâches. Dans cette arborescence (6), il est possible de créer des hyperliens pour des termes insérés à certains niveaux (62) de l'arborescence. Les adresses, stockées dans la mémoire (13) de l'équipement d'automatisme (1) et saisies pour ces hyperliens créés, renvoient sur des documents externes stockés sur la station de programmation (2) ou sur un serveur (5), tel qu'un serveur WEB. Par exemple un hyperlien renvoyant sur un document concernant le schéma de câblage d'une bobine, se trouvera dans l'arborescence dans un niveau inférieur au niveau bobine. L'utilisateur commence d'abord par créer dans l'arborescence (6), par exemple, un répertoire (63) regroupant tous les hyperliens qu'il souhaite insérer dans l'arborescence (6). La création de ce répertoire (63) utilisateur est réalisée dans le navigateur en sélectionnant à l'aide de la souris, la racine de l'arbre, ici, sur la figure 3, "Station". L'opérateur clique alors sur le bouton droit de la souris (22) pour afficher un menu contextuel. Dans ce menu contextuel (non représenté), l'utilisateur clique sur une instruction permettant d'ajouter un répertoire (en anglais "Add user directory"). L'opérateur peut, par exemple, ajouter le répertoire (63) dénommé "My Hyperlink" comme représenté sur les figures 3 et 4,. La création de l'hyperlien dans un sous-niveau de ce répertoire se fait de la manière suivante. L'utilisateur sélectionne à l'aide de la souris, le répertoire (63) qu'il a créé, ici, "My Hyperlink". Ensuite, l'utilisateur effectue un click droit pour faire apparaître un menu contextuel (64) représenté en figure 3. Dans ce menu contextuel (64), l'utilisateur choisit l'option (65) "ajouter un hyperlien" sur la figure 3, (en anglais, "Add hyperlink"). En cliquant sur cette option, une boîte de dialogue de saisie de l'adresse de l'hyperlien, similaire à celle de création dans un champ commentaire, apparaît en incrustation sur l'écran de la station de programmation (2). Cette boîte de dialogue comprend en plus d'un champ de saisie (410, fig. 5) du chemin du document associé, un champ (411) de saisie permettant à l'utilisateur de saisir le terme, comme "schéma électrique" (ou "Electrical schema") dans l'exemple de la figure 4, qu'il souhaite voir devenir "hyperlien" à ce sous-niveau du répertoire (63) créé. Une fois le chemin du document saisi dans le champ prévu de cette boîte de dialogue, l'utilisateur peut alors valider ou annuler l'opération d'insertion du terme hyperlien dans l'arborescence (6) en cliquant respectivement sur un bouton dénommé "OK" (412) ou sur un bouton dénommé "Cancel" (413) (en français "Annuler"). Une fois l'hyperlien créé, l'utilisateur peut visualiser le document associé à cet hyperlien dont l'adresse est mémorisée dans la mémoire (13) de l'équipement d'automatisme (1) en sélectionnant le terme hyperlien, par exemple en effectuant un clic droit et en choisissant l'option (69) "Open" (en français "Ouvrir") dans le menu contextuel (68) qui apparaît, comme représenté en figure 4.

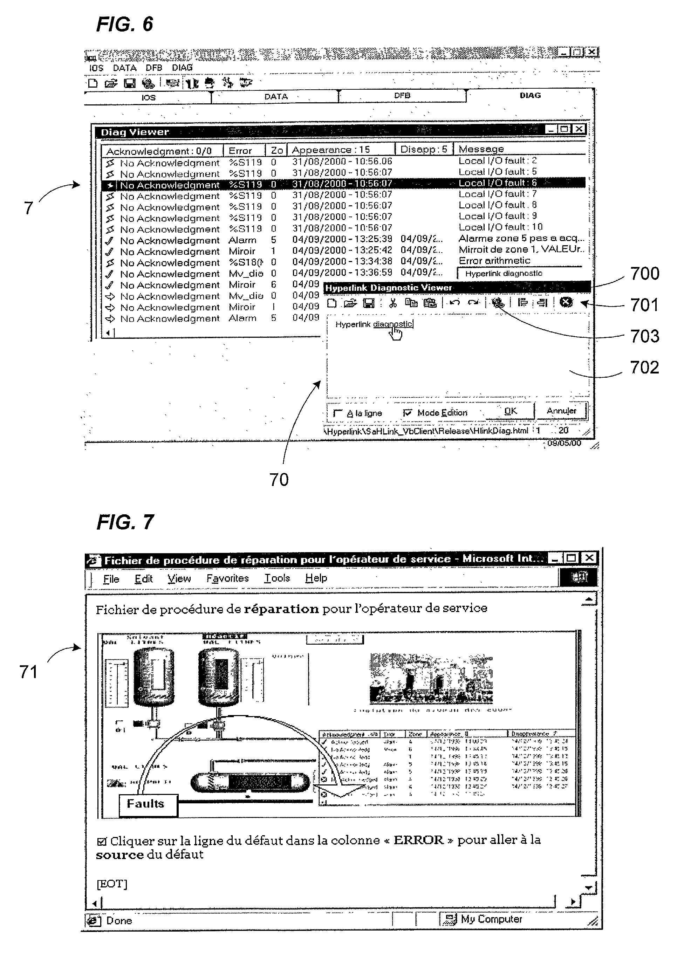

En référence à la figure 6, il est également possible de créer des hyperliens dans des messages (70) relatifs à un défaut dans le programme application (3). Ces messages (70) (en anglais "Hyperlink diagnostic viewer") sont semblables aux champs commentaires (30) du programme application (3), ils n'acceptent que du texte et en petite quantité du fait de la taille réduite des mémoires de l'équipement d'automatisme. Ils permettent en appelant des moyens d'affichage, comprenant un programme d'affichage, d'afficher une entête (700), une barre d'outils (701) comprenant une icône (703) de création d'hyperliens et un espace (702) de saisie. Ces messages (70) s'affichent en incrustation sur l'écran (7) de diagnostic (en anglais "Diagnostic viewer") du programme application (3). Dans un message (70) de diagnostic, il sera possible de cliquer sur un terme hyperlien, par exemple, sur le terme «diagnostic», comme représenté sur la figure 6. Cette action envoie l'utilisateur vers des documents qui peuvent être des compléments d'informations qui vont l'aider dans sa démarche de résolution de la panne ou vers une feuille lui permettant de consigner des données relatives à la panne. De plus, les documents externes étant facilement modifiables, cela permettra de constituer une base de connaissance importante sur le programme d'application. La figure 7 montre un exemple dans lequel le document associé (71) d'aide au diagnostic est une page WEB visualisée sur «Microsoft Internet Explorer» (marques déposées).

Il est déjà connu de pouvoir modifier en ligne un commentaire d'un programme application sans perturber le déroulement du programme application dans l'équipement d'automatisme. Un autre avantage de l'invention résidera donc dans la possibilité de modifier en ligne un hyperlien sans impacter le fonctionnement de l'équipement d'automatisme, ce qui favorisera la mise à jour d'une base de connaissance par les utilisateurs.

On peut par ailleurs naviguer dans différents documents si l'hyperlien mémorisé dans l'équipement d'automatisme pointe sur un document externe qui lui-même peut contenir d'autres hyperliens.

Ainsi, sans augmenter considérablement la quantité d'informations mémorisées par l'équipement d'automatisme (1), on améliore considérablement l'ergonomie et les facultés d'utilisation d'informations disponibles sur des équipements externes à l'équipement d'automatisme (1). Alors que les hyperliens sont généralement réservés à la gestion et consultation de documents en permettant de compléter l'information d'un document source par des liens à des documents complémentaires avec un nombre d'imbrications infini, l'innovation réside dans son utilisation dans une application d'automatisme, c'est à dire que les documents complémentaires seront aussi bien insérables et consultables en temps réel lors de la conception de l'application d'automatisme, que lors de l'exploitation. Cela facilitera donc le travail des opérateurs de maintenance, ce qui conduira à une réduction des temps de maintenance et donc à une optimisation de la disponibilité de l'application d'automatisme.

Selon un autre mode de réalisation de l'invention, il sera également possible de visualiser des documents relatifs à l'application d'automatisme à partir de n'importe quel terminal (50, fig. 8) connecté avec l'équipement d'automatisme (1) où sont mémorisées les adresses de ces documents externes. Ce terminal (50) devra simplement comporter des navigateurs, tels que par exemple "Microsoft Internet Explorer" (marques déposées), visualiseurs (en anglais "viewer") ou éditeurs pour visualiser les documents externes mémorisés par exemple dans un serveur (5), tel qu'un serveur WEB. L'avantage est que le terminal (50) n'a pas besoin de disposer du logiciel de programmation et d'édition des langages graphiques de l'équipement d'automatisme pour pouvoir cliquer sur un hyperlien et visualiser les documents externes.

Pour cela, il convient de décrire une application d'automatisme à l'aide d'un langage unique universel, tel que le langage XML (eXtended Markup Language) basé sur des objets hiérarchisés, à partir d'une grammaire qui est propre à la traduction dans ce langage XML, d'un programme d'application d'automatisme écrit dans un des langages graphiques normalisés, par exemple en LADDER, SFC ou FBD. Cette description est uniquement textuelle (aucune information binaire) et mémorisée sur la station de programmation (2) sur laquelle est chargé le programme application (3). Elle est indépendante de l'implémentation et doit respecter les standards XML. La description XML d'une application pourra être stockée en tout ou partie sous forme de fichiers. Ces fichiers pourront être importés et/ou exportés vers des logiciels tiers. On attribue à chaque objet descriptif de l'application en langage XML, d'une part des balises XML (en anglais "Tags") qui sont des mots encadrés par des signes "inférieur" ("<") et "supérieur" (">") et d'autre part des attributs (de la forme "*nom=valeur*"). L'application entière peut donc être décrite à l'aide de telles balises et attributs. Les balises sont utilisées seulement pour délimiter les éléments de données et laissent l'entière interprétation des données à l'application qui les lit.

Selon l'invention, le commentaire ainsi que l'hyperlien qu'il peut contenir constituent une simple chaîne de texte avec des balises au format HTML standard encadrant le terme hyperlien dans le commentaire. Dans le programme d'application formulée en langage graphique, l'hyperlien est formulé de manière standard, c'est-à-dire encadré par des balises :
"<**a href**=hyperlinkPath>hyperlinkText</**a**>"

Comme décrit plus haut, la balise de début "<**a href**=" définit l'adresse du document associé "hyperlinkPath". Ce chemin correspond à une adresse URL ("**U**niform **R**esource **L**ocation").

Du fait de cette écriture standard, la syntaxe de formulation de l'hyperlien sera réécrite selon une transformation standard lors du passage du langage graphique ou textuel au langage XML. La chaîne de texte nécessitera un traitement, en particulier au niveau des balises encadrées par les signes inférieur "<" et supérieur ">" car il s'agit de délimiteurs également utilisés en XML. Le processus d'export au format XML qui est décrit ci-dessous, comportera des fonctionnalités de vérification et de contrôle de la syntaxe d'écriture de l'hyperlien et traduira les signes inférieur "<" et supérieur ">" en respectivement "<" signifiant "less than" (en français "inférieur à") et ">" signifiant "greater than" (en français "supérieur à"). La représentation de l'hyperlien au format XML sera la suivante :
"<**a href**=hyperlinkPath>hyperlinkText</**a**>"

Cette réécriture est directement utilisable en XML. L'exploitation d'un tel format XML à partir d'un navigateur standard, tel que par exemple, "Microsoft Internet Explorer" (marques déposées), en particulier pour accéder aux hyperliens, peut se faire à partir de transformations **XML S**tylesheet **L**anguage **T**ransformations (XSLT) du standard XML.

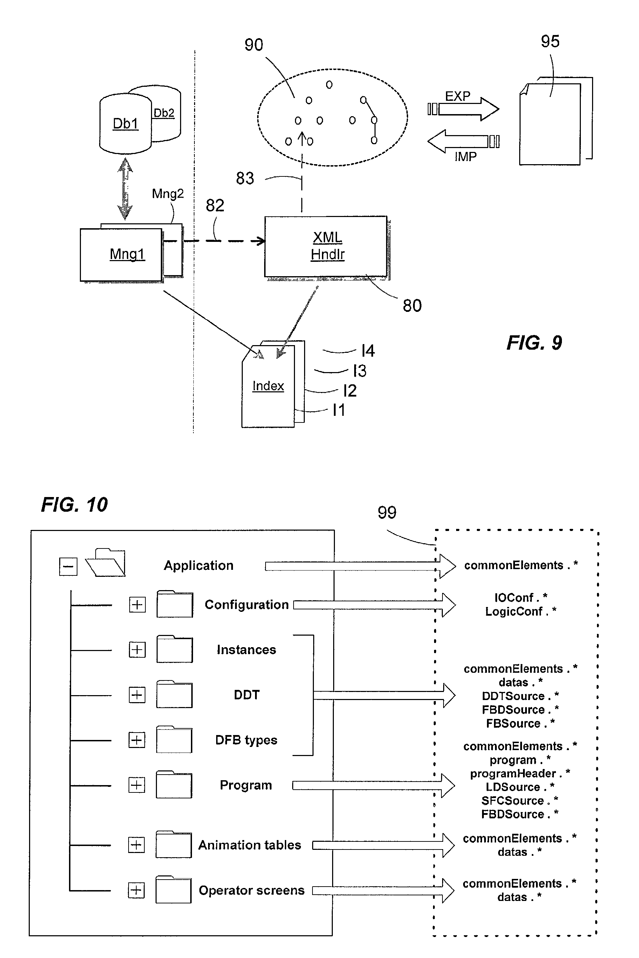

Les fichiers (99, fig.10) descriptifs de la grammaire sont organisés de la manière suivante.

Une application d'automatisme peut se décomposer principalement en 3 parties : son programme, ses données et ses entrées / sorties. La grammaire de chacune de ces parties est décrite, selon l'invention, dans un fichier ".dtd" de définition du type de document (**D**ocument **T**ype **D**efinition) (par exemple : program.dtd pour le fichier programme d'application, datas.dtd pour le fichier de données, IOConf.dtd, pour le fichier de configuration des entrées-sorties) ou de manière équivalente dans un fichier "Schéma" de type "*.xsd". Par la suite, on parlera de fichiers ".dtd" mais ils pourront être remplacés par des fichiers "Schéma" au suffixe ".xsd" beaucoup puissant que les obsolètes ".dtd" car ils sont décrits eux-mêmes en XML alors que les ".dtd" ont une syntaxe spécifique non analysable par un analyseur syntaxique XML. Lorsque la notation de type "datas.*" est utilisée, cela signifie qu'il s'agit d'un fichier de données qui peut être de type ".dtd" ou ".xsd". Chacune des parties d'une application peut elle-même se décomposer en sous-parties faisant elles-mêmes l'objet d'un fichier descriptif en ".dtd". Ainsi à titre d'exemple, le fichier programme (program.dtd) pourra inclure les fichiers source (LDsource.dtd, SFCsource.dtd et FBDsource.dtd, comme cela est représenté à la figure 10) qui contiennent les grammaires des différents langages graphiques de type schéma à contact LADDER (LD), diagrammes fonctionnels en séquence «**S**equential **F**unction **C**hart» (SFC) et bloc fonction «**F**unction **B**loc **D**iagram» (FBD).

Les fichiers de grammaire ".dtd" ou ".xsd" (99, fig.10) sont les fichiers spécifiques au constructeur de l'équipement d'automatisme. Ils contiennent la description des différentes grammaires et définissent la structure des fichiers de description XML. Ainsi le dossier "Application" (figure 10) comprend le fichier (commonElements. *) qui contient les éléments communs à l'application d'automatisme, à savoir le nom de l'application, la date de réalisation de l'application ou de la version, le numéro de version et des commentaires. Le dossier "Configuration" contient les fichiers de configuration respectivement des entrées/sorties (IOConf.*, fig 10) et de la configuration logique (LogicConf.*). Les dossiers "Instances", "DDT", "DFB types" contiennent la description des données, instances, DDT, FB type sous forme de fichiers (datas, DDTSource.*, FBDSource.*, FBSource.*). Le dossier "Program" contient les fichiers sources (LDsource.*, SFCsource.* et FBDsource.*) qui contiennent respectivement la description de chaque grammaire respective à chaque représentation graphique usuelle en matière d'automatisme. Le dossier "Tables Animation" contient la description des tables d'animation qui est constituée en partie des fichiers (commonElements. * et datas. *). Le dossier "Ecran opérateur" contient les descriptions des écrans d'exploitation constituées des fichiers des éléments communs (commonElements.*) et des données du fichier (datas.*). Ces fichiers de définition du type du document ".dtd" ou du schéma ".xsd" définissent la structure des fichiers XML. Un fichier XML d'une application représente une instance de la grammaire définie dans le fichier ".dtd" ou ".xsd" correspondant. Les fichiers XML sont eux spécifiques de l'application d'automatisme du client. Le principe de correspondance entre ces 2 types de fichiers est défini par la norme XML V1.0 conformément au modèle objet du document (DOM, **D**ocument **O**bject **M**odel). Le modèle objet du document DOM est un ensemble de fonctions de programmation (API : **A**pplication **P**rogramming **I**nterface) standards pour manipuler des fichiers XML.

La correspondance entre les fichiers XML et les bases de données de l'application est la suivante :

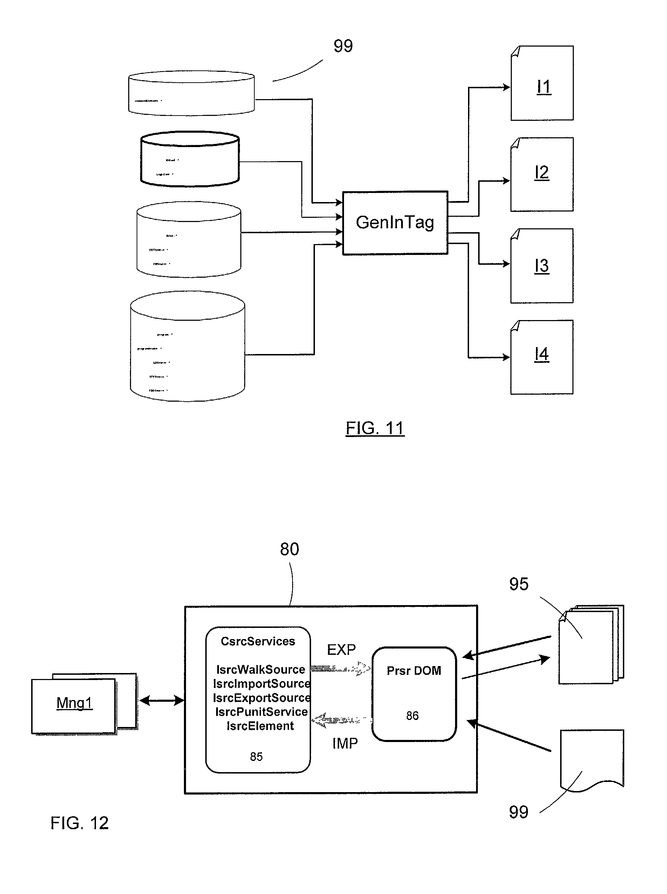

Une application d'automatisme est stockée en binaire dans une mémoire d'une station de programmation (2). Cette application d'automatisme selon l'art antérieur des représentations graphiques, est représentée sur la partie de la figure 9 située à gauche de la ligne en pointillés mixte, dans plusieurs bases de données : une base de données (Db1) pour le programme, une base de données (Db2) pour la configuration d'entrées/sorties, etc... La description de l'application en langage XML est complètement indépendante de son implémentation dans les bases de données constructeur. Pour assurer cette indépendance, un composant logiciel (GenInTag) particulier a été développé qui constitue un générateur d'index de balises (Tag), représenté sur la figure 11.

Le logiciel générateur (GenInTag) automatique d'index de balises doit être exécuté pour produire les fichiers d'index qui permettent de faire la correspondance entre l'arborescence XML représentative de l'application d'automatisme et les structures des bases de données (Db1, Db2). Ce composant extrait les mots clés (éléments, objets et attributs) des différents fichiers de grammaire ".dtd", qui définissent les grammaires XML du programme, des données, de la configuration d'entrées/sorties en langage XML pour générer des index organisés selon plusieurs dossiers (I1 à 14, figure 11) contenant chacun un ou plusieurs fichiers de constantes d'index utilisés par les différents gérants (Mng.1 à Mng.n) gérant une application d'automatisme.

Un gestionnaire XML (XML HndIr) (80, fig. 9) est un composant logiciel, développé par exemple en langage C++, utilisable au travers d'une interface COM. Il encapsule et utilise les services d'un composant analyseur XML (parser DOM ou Prsr DOM) (86, fig.12) et offre des services de haut niveau pour la gestion de l'arborescence graphique XML (90). Le gestionnaire XML (XML HndIr) est un composant qui permet à la station de fabriquer l'arborescence (90) représentative de l'application d'automatisme à partir des fichiers de description (95) en utilisant les fichiers de grammaire (99) ou de fabriquer cette arborescence à partir des demandes des gérants (Mng. 1, Mng. n) des bases de données de l'application. Il utilise les différents gérants (Mng. 1, Mng. 2) appelant les services du gestionnaire XML (XML Hndlr) en utilisant les fichiers d'index (I1 à 14), générés par le composant GenInTag. Comme représenté à la figure 9, chaque partie d'une application, par exemple programme (Db1) données (Db2), est gérée par un gérant spécifique pour la gestion de chaque type de données, par exemple (Mng. 1) pour l'application, (Mng. 2) pour les données.... Le gestionnaire XML (XML HndIr) comporte en plus de l'analyseur (Prsr DOM) une routine d'exportation (EXP) et une routine d'importation (IMP).

Dans le cadre de la présente l'invention, seule la routine d'exportation est intéressante. En effet, il s'agit de pouvoir rendre accessible les hyperliens dans le programme source écrit en XML. La routine d'exportation écrit, dans un ou plusieurs fichier(s) de description XML, les données de l'application d'automatisme tandis que la routine d'importation lit dans un ou plusieurs fichier(s) de description XML les données de l'application d'automatisme. Ces routines font appel à la fois au service d'un module (85) de service (CsrcServices) qui lui-même se décompose en plusieurs services. Un service "IscrWalkSource" permet le déplacement dans le fichier (95) en langage XML chargé en mémoire. Le composant "CsrcServices" comprend également un service "IsrcImportSource" qui est un service d'initialisation de lecture d'un fichier XML (95), le service "IsrcexportSource" qui est un service d'écriture de fichiers XML et le composant "IsrcPUnitService" qui permet de gérer les services spécifiques à la station de programmation. Enfin, le gestionnaire XML (80) comporte un service "IsrcElement" qui est un service permettant l'accès au contenu d'une donnée XML (éléments et attributs). Chacun des gérants (Mng. 1, Mng. 2) dialogue avec les différents services du gestionnaire XML (80). Ils utilisent les fichiers index (I1 à 14) générés par le composant GenInTag correspondant aux données de la base de données.

L'application mémorisée dans le document XML (95, figure 9) est modélisée par le composant gestionnaire XML (80) sous forme d'arborescence (90) en utilisant d'une part les informations réparties dans la mémoire de la station de programmation dans des bases de données et sous forme de fichiers binaires, et d'autre part les index (I1 à 14) pour accéder à ces informations et les représenter sous forme arborescente. Le composant gestionnaire XML (80), comme représenté à la figure 9, communique par des notifications avec les gérants (Mng. 1, Mng. 2) des bases de données (Db1, Db2) et avec le module de représentation en mémoire de l'application. Ainsi, lors de la routine d'exportation, un gérant (Mng1, 100) peut émettre une notification «CreateNode (index, value) » (82) demandant au gestionnaire XML (80) de créer un noeud ayant un index déterminé et une valeur déterminée. Le gestionnaire XML (80), en utilisant les valeurs d'index et les fichiers de grammaire (99), va demander au module de gestion de l'arborescence de créer par une notification «Create Node (tagriame, value)» (83) un noeud ayant pour nom de balise le nom défini par «tagname» et pour valeur, la valeur désignée par «value». Le développement de ces grammaires en langage XML et l'écriture de fichiers permettent de développer un interpréteur sur un équipement d'automatisme, ce module interpréteur ayant pour fonction de traduire les instructions, décrivant une application, formulées en langage XML, en instructions exécutables par le système d'exploitation (operating system) de l'équipement d'automatisme. De cette façon, on aboutit à un équipement d'automatisme dont le langage de programmation serait accessible à n'importe quel éditeur disponible sur une machine de type PC ce qui permettrait ainsi au concepteur d'applications d'automatisme de développer des programmes application dont les fichiers seraient mémorisés en ASCII, ceci quel que soit le constructeur de l'équipement d'automatisme et le système d'exploitation utilisé, à condition simplement que l'équipement d'automatisme ait été pourvu du module interpréteur de langage XML en langage binaire propriétaire.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de mise en oeuvre d'un équipement d'automatisme (1) comportant une unité centrale (10) et au moins un module (11) d'entrées-sorties, l'unité centrale (10) comprenant au moins un processeur (14) et une mémoire application (13) qui contient un programme application (3) permettant de faire le contrôle/commande d'une application d'automatisme via le(s) module(s) (11) d'entrées-sorties, **caractérisé en ce que** le procédé comporte une étape de stockage dans la mémoire application (13) d'au moins une adresse sous forme d'un hyperlien qui est accessible dans un champ commentaire (30) du programme application (3) et qui est associé à un document relatif à l'application d'automatisme, mémorisé à l'extérieur de l'équipement d'automatisme (1).

2. Procédé de mise en oeuvre selon la revendication 1, **caractérisé en ce que** les adresses stockées dans la mémoire application (13) de l'équipement d'automatisme (1) sont accessibles sous la forme d'hyperliens dans des champs commentaires (30) du programme application (3).

3. Procédé de mise en oeuvre selon la revendication 2, **caractérisé en ce qu'**il comporte une étape de visualisation d'un document relatif à l'application d'automatisme et associé à un hyperlien mémorisé dans la mémoire application (13) de l'équipement d'automatisme (1), grâce à des moyens d'affichage chargés sur une station de programmation (2) reliée à l'équipement d'automatisme (1) et exploitant les données d'un champ commentaire (30) du programme application (3).

4. Procédé de mise en oeuvre selon la revendication 3, **caractérisé en ce qu'**au moins un document relatif à l'application d'automatisme est stocké dans des moyens de mémorisation (201) de la station de programmation (2).

5. Procédé de mise en oeuvre selon la revendication 3, **caractérisé en ce qu'**au moins un document relatif à l'application d'automatisme est stocké sur un serveur (5) WEB Internet ou Intranet.

6. Procédé de mise en oeuvre selon l'une des revendications 4 ou 5, **caractérisé en ce que** l'hyperlien manipulé par la station de programmation (2) est du texte au format HTML.

7. Procédé de mise en oeuvre selon la revendication 6, **caractérisé en ce que** le programme application (3) mémorisé dans l'équipement d'automatisme (1) est décrit à l'aide d'un langage XML.

8. Procédé de mise en oeuvre selon la revendication 3, **caractérisé en ce que** des moyens de visualisation de la station de programmation (2) présentent une arborescence (6) de la structure du programme d'application (3) de l'équipement d'automatisme (1), au moins une adresse mémorisée dans la mémoire application (13) de l'équipement d'automatisme (1) associée à un document externe étant rendue accessible sous la forme d'un hyperlien visualisable à un certain niveau (62) de l'arborescence (6).

9. Station de programmation (2) capable de mettre en oeuvre un procédé selon l'une des revendications précédentes, **caractérisée en ce qu'**elle comprend des moyens de connexion avec un équipement d'automatisme (1), des moyens de lecture d'une adresse sous forme d'hyperlien mémorisée dans une mémoire application (13) de l'équipement d'automatisme (1), des moyens de recherche et de visualisation (21) d'un document associé à l'hyperlien, mémorisé à l'extérieur de l'équipement d'automatisme (1) et relatif à l'application d'automatisme.

10. Station de programmation selon la revendication 9, **caractérisée en ce qu'**elle comprend des moyens de mémorisation (201) d'au moins un document associé à un hyperlien et relatif à l'application d'automatisme.

11. Station de programmation selon la revendication 9, **caractérisée en ce qu'**elle comprend des moyens d'insertion pour insérer une adresse sous forme d'hyperlien dans un champ commentaire (30) d'un programme application (3) d'un équipement d'automatisme (1), cette adresse étant stockée dans la mémoire application (13) de l'équipement d'automatisme (1).

12. Station de programmation selon la revendication 11, **caractérisée en ce qu'**elle comprend des moyens de sélection d'un ou plusieurs termes dans un champ commentaire (30) du programme application (3), les moyens d'insertion insérant une adresse sous forme d'hyperlien dans ce champ commentaire (30) au niveau du(des) terme(s) sélectionné(s).

13. Station de programmation selon la revendication 11, **caractérisée en ce qu'**elle comprend des moyens d'affichage d'une arborescence (6) de la structure d'un programme application (3) d'un équipement d'automatisme (1), comportant plusieurs niveaux (62) et des moyens d'insertion permettant d'insérer une adresse sous la forme d'un hyperlien à un certain niveau de l'arborescence (6).

14. Equipement d'automatisme comportant une unité centrale (10) et au moins un module (11) d'entrées-sorties, l'unité centrale (10) comprenant au moins un processeur (14) et une mémoire application (13) qui contient un programme application (3) permettant de faire le contrôle/commande d'une application d'automatisme via le(s) module(s) (11) d'entrées-sorties, **caractérisé par le fait que** la mémoire application (13) de l'équipement d'automatisme (1) mémorise au moins une adresse sous forme d'un hyperlien qui est accessible dans un champ commentaire (30) du programme application (3) et qui est associé à un document relatif à l'application d'automatisme, mémorisé à l'extérieur de l'équipement d'automatisme (1).
